(19) Europäisches Patentamt
European Patent Office
Office européen des brevets

(11) EP 4 353 689 A1

(12) EUROPEAN PATENT APPLICATION

(43) Date of publication:
**17.04.2024 Bulletin 2024/16**

(21) Application number: **22200777.5**

(22) Date of filing: **11.10.2022**

(51) International Patent Classification (IPC):
***C02F 5/10*** *(2023.01)* *C02F 1/00* *(2023.01)*
*C02F 1/24* *(2023.01)* *C02F 1/44* *(2023.01)*
*C02F 101/30* *(2006.01)* *C02F 1/76* *(2023.01)*

(52) Cooperative Patent Classification (CPC):
**C02F 5/10;** C02F 1/004; C02F 1/24; C02F 1/441; C02F 1/444; C02F 1/766; C02F 2101/306; C02F 2303/04; C02F 2303/14; C02F 2303/20; C02F 2303/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Coöperatie Koninklijke Cosun U.A.**
**4814 NE Breda (NL)**

(72) Inventors:
- **STAPS, Franciscus Adrianus Ludovicus Maria**
  **4847 CG Teteringen (NL)**
- **GÖLBASI, Özgur**
  **3076 BX Rotterdam (NL)**

(74) Representative: **Nederlandsch Octrooibureau**
**P.O. Box 29720**
**2502 LS The Hague (NL)**

(54) **CARBOXYMETHYL INULIN AS AN INHIBITOR OF BIOFILM FORMATION IN WATER TREATMENT SYSTEMS**

(57) The present invention concerns the use of carboxymethyl inulin in a water treatment system comprising a membrane as (a) an inhibitor of biofilm formation; or (b) a biofilmremoval agent; or (c) a permeability enhancer for the membrane; or (d) a combination of (a) - (c).

The present invention further concerns a process for the treatment of soft water using membrane filtration, wherein said process comprises the steps of (i) providing a water treatment system comprising a membrane; (ii) providing a stream of soft water to be treated, said stream not comprising carboxymethyl inulin; (iii) adding carboxymethyl inulin to the stream of soft water to be treated provided in step (ii); and (iv) treating the stream obtained in step (iii) by filtration over the membrane, resulting in a retentate and a permeate.

The present invention further concerns a process for the removal of biofouling from a water treatment system comprising a membrane, wherein said process comprises the steps of (i) providing a water treatment system comprising a membrane, wherein the water treatment system comprises biofouling; (ii) providing an aqueous cleaning solution comprising carboxymethyl inulin; (iii) treating the water treatment system comprising the membrane provided in step (i) with the aqueous cleaning solution provided in step (ii).

EP 4 353 689 A1

## Description

### FIELD OF THE INVENTION

The present invention concerns uses of carboxymethyl inulin (CMI) in water treatment systems comprising a membrane, such as water purification systems. The invention further relates to a process for the treatment of soft water using membrane filtration and to a process for the removal of biofouling from a water treatment system comprising a membrane.

### BACKGROUND OF THE INVENTION

Clean potable water is an essential ingredient for a healthy human life. The World Health Organization (WHO) has however stated that by the year 2025 half of the world's population will live in areas with permanent water scarcity. Industry also uses huge amounts of water, for example as cooling water or to create steam. The ever increasing pressure on water resources requires more attention to water conservation initiatives, reduction of water consumption and recycling/purification of waste water.

A common way to produce high quality potable water or process water for industrial heating or cooling processes is based on membrane filtration processes, such as microfiltration (MF), ultrafiltration (UF), nanofiltration (NF) and reverse osmosis (RO).

The main disadvantage encountered with membrane filtration water treatment processes is fouling of the membrane. Although membrane fouling is a complex phenomenon, it can in general be defined as the accumulation of undesired deposits on the membrane surface or inside the membrane pores.

The presence of these deposits may lead to a decreased membrane efficiency. The fouling may, for example, result in a lower permeability and increased salt passage. This decrease in permeability leads to an increased pressure drop over the membrane, which in its turn leads to an increased energy consumption. In order to combat the accumulation of fouling over time, the membranes require frequent cleaning, which leads to an increased downtime of the water treatment system. Additionally, both the membrane fouling and frequent cleaning of the membrane can reduce the membrane lifetime and thus add operational costs.

There are different types of membrane fouling, which can be classified according to the type and/or origin of the deposits, including inorganic fouling, organic fouling, colloidal fouling and biofouling.

Biofouling refers to the formation of a biofilm in the water treatment system, e.g. on the membrane surface, through the adhesion and proliferation of microorganisms. This biofilm can contain different types of microorganisms including bacteria, algae, protozoa and fungi. These microorganisms extract nutrients, such as carbon, nitrogen and phosphorus, from the feed water to sustain their proliferation. In addition to these microorganisms, the second key component of this biofilm, which in most cases accounts for the majority of the biofilm's dry mass, are extracellular polymeric substances (EPS). EPS consist of variety of mainly high molecular weight organic substances, including polysaccharides, proteins, glycoproteins, lipoproteins, lipids and nucleic acids. These substances are excreted by the microorganisms to aid with their adhesion to the water treatment system, e.g. to the membrane, and to provide a favourable environment for further colonization.

Whilst microorganisms are an important part of biofouling, as they aggregate on the membrane surface, the negative effect on membrane permeability is mainly caused by the formation and accumulation of EPS on the membrane surface.

To minimize the occurrence of biofouling and, therefore, the need for periodic cleaning, numerous methods and strategies have been developed to control and reduce biofouling.

The most common technique to control biofouling is through antimicrobial treatment. This is conventionally done by dosing the feed with antimicrobial agents. These agents can include oxidizing agents, such as chlorine, chlorine dioxide, chloramines, potassium ferrate, ozone, iodine, hydrogen peroxide and peracetic acid, or non-oxidizing agents, such as formaldehyde, glutaraldehyde and quaternary ammonium compounds. A disadvantage is that most antimicrobial agents only attack the microorganisms themselves and do not reduce the EPS already present, which is the main contributor to the negative effects associated with biofouling. Hence, as will be appreciated by those skilled in the art, this approach further requires the effective removal of the treated biofouling from the system, e.g. using dispersants, to avoid biofilm formation and biofilm build-up in the system.

WO2013/148937A1 describes the use of a salt derived from a thioamine or an oxyamine and an acid in the treatment of industrial wastewater to provide at least two of the following uses: metal corrosion inhibition, scale inhibition, suspended matter dispersion, biocide efficacy, or biofilm removal/biofilm dispersion.

In addition to the hazardous nature of some of these antimicrobial agents and/or their costs, the main disadvantage of the use of these agents is that they lead to the formation of waste which can be environmentally, ecologically and toxicologically harmful such that additional disposal/treatment costs are involved. Additionally, the membranes

themselves can be sensitive to these products.

Lastly, due to the different effect that antimicrobial agents have on different microorganisms, the use of an antimicrobial agent might lead to the accumulation and/or the formation of microorganisms that are resistant to that antimicrobial agent.

A limited number of more environmentally and/or ecologically friendly alternatives have been proposed.

H. Kim et al., Fuel, 253, 2019, pp 754-761, disclose the use of linoleic acid, which is a plant fatty acid, to inhibit biofilm formation by Pseudomonas aeruginosa, without affecting bacterial growth.

H. Vera-Villalobos et al., Biofouling, 36, 2020, pp 505-515, disclose the use of a bacterial supernatant obtained from Alteromonas sp. strain Nil-LEM for the removal of biofouling.

An alternative form of antimicrobial treatment is by UV irradiation. This treatment can, however, not be used to control the biofouling within a membrane.

An alternative technique to reduce biofouling is through nutrient limitation. This technique aims to reduce biofouling by depriving the microorganisms of the nutrients necessary for their proliferation. For example, the level of assimilable organic carbon (AOC), which is the fraction of labile dissolved organic carbon that can be assimilated by microorganisms, can, amongst others, be reduced by coagulation, activated carbon adsorption, biological filtration, slow sand filtration or membrane filtration. An alternative nutrient that can be limited is phosphorus or phosphate, which can be achieved through chemical precipitation, crystallization, ion exchange or adsorption. The negative aspects of nutrient limitation are that it requires additional pretreatment steps and leads to the creation of additional waste.

Carboxymethyl inulin (CMI) is already known in the field of water treatment as an antiscalant, crystal growth inhibitor and sequestering agent for free cations. Additionally, it is known that the use of carboxymethyl inulin in water treatment does not actively contribute to biofouling because it does not contain assimilable organic carbon (AOC). See in this respect for example G. van Engelen et al., Desalination and Water Treatment, 51, 2013, pp 921-923 and G. Galjaard, 18 Years RO-Experience at WTP Heemskerk, Biofouling Aspects, AMTA/AWWA Membrane Technology Conference, Long Beach, CA, 14 February 2017.

It is an object of the present invention to provide an agent that is able to reduce or inhibit biofouling in water treatment systems comprising a membrane.

It is a further object of the present invention to provide an agent that is able to reduce the negative effects of biofouling in water treatment systems. Examples of the negative effects of biofouling include decreased membrane permeability, increased need for membrane cleaning, decreased membrane lifetime and increased system downtime.

It is a further object of the present invention to provide an agent that is able to aid in the removal of biofouling in water treatment systems.

It is a particular object of the present invention to provide an agent that is able to achieve one or more of the aforementioned objects in water treatment systems using soft water as a feed.

It is a further particular object of the present invention that the agent provided has one or more of the following properties: sustainable, biobased, environmentally friendly, biodegradable, phosphorus- and nitrogen-free, AOC -free or low risk to persons, animals and/or the environment.

## SUMMARY OF THE INVENTION

The inventors have unexpectedly found that one or more of these objectives can be met by dosing water to be treated, such as soft water, in a water treatment system comprising a membrane, such as a water purification system, with carboxymethyl inulin.

As will be shown in the appended examples, it was surprisingly found that the use of carboxymethyl inulin in soft water to be treated in a water treatment system with new membranes leads to a slower pressure build-up over the membrane in the water treatment system at constant flux across the membrane. When using soft water and new membranes, pressure build-up is indicative for the formation of biofouling. This slower pressure build-up allows a reduction of the membrane's cleaning frequency and results in an increased membrane's lifetime and a corresponding reduction of operational costs. This slower pressure build-up over the membrane in the water treatment system is also seen in hard water to be treated and in water treatment systems with membranes that have already been in use for some time.

Carboxymethyl inulin is biobased, environmentally friendly, biodegradable, phosphorus- and nitrogen-free, AOC_free and has a low risk to persons, animals and/or the aquatic environment.

Accordingly, in a first aspect, the invention provides the use of carboxymethyl inulin in a water treatment system comprising a membrane as:

(a) an inhibitor of biofilm formation; or
(b) a biofilm-removal agent; or
(c) a permeability enhancer for the membrane; or
(d) a combination of (a) - (c).

In a second aspect, the invention provides a process for the treatment of soft water using membrane filtration, wherein said process comprises the steps of:

(i) providing a water treatment system comprising a membrane;
(ii) providing a stream of soft water to be treated, said stream not comprising carboxymethyl inulin;
(iii) adding carboxymethyl inulin to the stream of soft water to be treated provided in step (ii); and
(iv) treating the stream obtained in step (iii) by filtration over the membrane, resulting in a retentate and a permeate.

As will be shown in the appended examples, it was further surprisingly found that the use of carboxymethyl inulin can even lead to the removal of already present biofouling in water treatment systems that have already been used for quite some time.

Hence, in a third aspect, the invention provides a process for the removal of biofouling from a water treatment system comprising a membrane, wherein said process comprises the steps of:

(i) providing a water treatment system comprising a membrane, wherein the water treatment system comprises biofouling;
(ii) providing an aqueous cleaning solution comprising carboxymethyl inulin;
(iii) treating the water treatment system comprising the membrane with the aqueous cleaning fluid provided in step (ii).

**DEFINITIONS**

In the context of the present invention the term '*biofouling*' is used to denote the fouling that is the result of a process wherein an organic biofilm is created, said biofilm comprising microorganisms and extracellular polymeric substances (EPS) excreted by the microorganisms. Examples of microorganisms that can be present in the biofilm are bacteria, algae, protozoa and fungi. Examples of extracellular polymeric substances (EPS) that can be present in the biofilm are polysaccharides, proteins, glycoproteins, lipoproteins, lipids and nucleic acids.

In the context of the present invention the term '*inorganic fouling'* is used to denote the fouling that is the result of a process wherein inorganic material is accumulated on the membrane surface and the term '*scaling*' has the normal meaning in the art of water treatment and is used to denote the subclass of inorganic fouling wherein the inorganic material accumulated on the membrane surface is the result of the precipitation of sparingly soluble salts dissolved in the water to be treated, such as calcium carbonate, calcium phosphate, calcium hydroxide, calcium bicarbonate, calcium sulfate, calcium chloride, metal silicates, barium sulfate, magnesium carbonate, magnesium sulfate, magnesium chloride, magnesium bicarbonate and magnesium hydroxide.

The term '*total water hardness (mg $CaCO_3$/l)*' as used herein denotes the sum of the concentrations of calcium and magnesium ions expressed as their equivalent value of calcium carbonate ($CaCO_3$) in milligrams per liter (mg/l), as calculated according to following formula:

$$Total\ water\ hardness\ (\mathrm{mg\ CaCO_3/l}) = 2.50 \cdot [\mathrm{Ca^{2+}}]\ (\mathrm{mg/l}) + 4.12 \cdot [\mathrm{Mg^{2+}}]\ (\mathrm{mg/l})$$

The term '*total water hardness (mmol/l)*' as used herein denotes the sum of the concentrations of calcium and magnesium ions in mmol/l:

$$Total\ water\ hardness\ (\mathrm{mmol/l}) = [\mathrm{Ca^{2+}}]\ (\mathrm{mmol/l}) + [\mathrm{Mg^{2+}}]\ (\mathrm{mmol/l})$$

In the context of the present invention the term *'inulin'* refers to polymers composed of linear chains of fructose units connected via a β-(2-1)-glycosidic bond which may have a terminal glucose unit, wherein the number of monosaccharide units in an inulin molecule (commonly referred to as the degree of polymerization, DP) is at least 3. Inulins with a terminal glucose (α-D-glucopyranosyl-[β-D-fructofuranosyl](n-1)-D-fructofuranosides) are referred to herein as GpyFn inulin. Inulins without a terminal glucose (β-D-fructopyranosyl-[D-fructofuranosyl](n-1)-D-fructofuranosides) are referred to as FpyFn. As is known to the skilled person, naturally occurring inulin mainly comprises GpyFn, but FpyFn may be present as a product of the hydrolysis of inulins, for example resulting from spontaneous degradation or resulting from a chemical or an enzymatic treatment wherein inulins are hydrolyzed.

A suitable method to determine the inulin chain length distribution is by a chromatographic method, such as high performance anion exclusion chromatography coupled to pulsed amperometric detection (HPAEC-PAD).

Inulin is found as a reserve polysaccharide in various plants such as chicory, Jerusalem artichoke and dahlia. The general structure of inulin can be represented by the following formula (I):

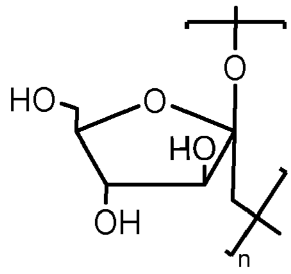

(I).

In the context of the present invention the term *'carboxymethyl inulin (CMI)'* is used to denote inulin functionalized with carboxymethyl groups. For example, inulin can be carboxymethylated via a Williamson etherification reaction using monochloroacetate under alkaline conditions.

Where reference is made herein to carboxylic acids or carboxyl groups, this term always refers to the free acid and to the anion thereof including any salt thereof. The general structure of carboxymethyl inulin can be represented by the following formula (II):

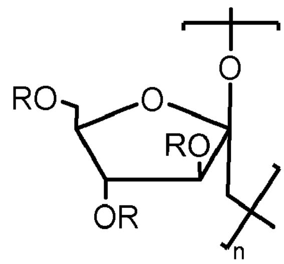

$R = -H$ or $-CH_2COOH$ (II).

In the context of the present invention the term *'average degree of substitution (DS)'* is used to denote the average number of carboxymethyl groups per monosaccharide unit of the inulin. As each monosaccharide unit of inulin contains three reactive hydroxyl groups, the maximum degree of substitution (DS) is 3.

BRIEF DESCRIPTION OF THE FIGURES

Figure 1 depicts a schematic representation of the water purification system used in the Examples.
Figures 2 and 3 depict the development of pressure drop over the candle filters applied in Example 1
Figures 4 and 5 depict the development of pressure drop over the full reverse osmosis array throughout the first year of usage of new reverse osmosis membranes in Example 2.
Figures 6 and 7 depict the development of pressure drop over the full reverse osmosis array of old membranes in Example 3.

**DETAILED DESCRIPTION**

*Uses*

In a first aspect, the invention concerns the use of carboxymethyl inulin in a water treatment system comprising a membrane as:

(a) an inhibitor of biofilm formation; or
(b) a biofilm-removal agent; or
(c) a permeability enhancer for the membrane; or
(d) a combination of (a) - (c).

As will be appreciated by those skilled in the art, the use according to the first aspect typically involves treating

water in the water treatment system. In other words, in a preferred embodiment, the water treatment system comprises water to be treated.

As will be appreciated by those skilled in the art, the use according to the first aspect typically involves adding the carboxymethyl inulin to water to be treated in the water treatment system. In other words, in a preferred embodiment, the water treatment system comprises water to be treated and the use according to the first aspect involves adding the carboxymethyl inulin to the water to be treated.

Biofouling can for example be present on the membrane, in a membrane cartridge of the water treatment system or in a membrane housing of the water treatment system.

The term '*the use of carboxymethyl inulin as an inhibitor of biofilm formation'* means that the carboxymethyl inulin inhibits the formation of a biofilm in a clean water treatment system comprising a fresh membrane or inhibits further biofilm formation in an already used water treatment system comprising a membrane that has already been used for some time.

The term '*the use of carboxymethyl inulin as a biofilm-removal agent*' means that the carboxymethyl inulin can effectively remove or reduce the amount of already present biofilm in the water treatment system, such as biofilm already present on the membrane.

The term '*the use of carboxymethyl inulin as a permeability enhancer for the membrane'* means that the carboxymethyl inulin can slow down biofilm formation on the membrane and/or remove or reduce the amount of already present biofilm on the membrane, resulting in a lower pressure drop over the membrane and/or a slower build-up of pressure drop over the membrane with a corresponding enhanced permeability for water. Accordingly, '*enhancedpermeability'* as used herein concerns the membrane permeability for water. In a preferred embodiment, (c) concerns the use of carboxymethyl inulin in a water treatment system comprising a membrane as a permeability enhancer for the membrane, wherein the membrane is a used membrane.

In a very preferred embodiment, the water treatment system is a water purification system, *e.g.* a water purification system for the production of potable water or for the production of process water for industrial applications.

The carboxymethyl inulin as described herein encompasses the free acid of carboxymethyl inulin and any water-soluble salt of carboxymethyl inulin. In embodiments, the carboxymethyl inulin comprises free acid carboxyl groups, carboxylate salts of metal cations, carboxylate salts of ammonium cations, carboxylate salts of primary ammonium cations, carboxylate salts of secondary ammonium cations, carboxylate salts of tertiary ammonium cations, carboxylate salts of quaternary ammonium cations or combinations thereof. Preferred examples of carboxylate salts of metal cations are sodium carboxylate groups and potassium carboxylate groups. In an embodiment, the carboxymethyl inulin comprises carboxylate salts of sodium cations, potassium cations, $NH_4^+$ cations, primary ammonium cations $NR^1H_3^+$, secondary ammonium cations $N(R^1)_2H_2^+$, tertiary ammonium cations $N(R^1)_3H^+$ and quaternary ammonium cations $N(R^1)_4^+$, wherein each $R^1$ is individually chosen from the group consisting of aryl, alkyl and alkyl alcohol. An example of a tertiary ammonium cation $N(R^9)_3H^+$ is triethyl ammonium cation.

In a preferred embodiment, the carboxyl groups on the carboxymethyl inulin are chosen from carboxylate salts of sodium, potassium, $NH_4^+$and combinations thereof. More preferably, the carboxyl groups on the carboxymethyl inulin comprise carboxylate salts of sodium.

In a very preferred embodiment, the carboxymethyl inulin is sodium carboxymethyl inulin.

In embodiments, the carboxymethyl inulin has an average degree of substitution (DS) by carboxymethyl groups of between 0.1 and 3, preferably between 0.3 and 2.75, such as between 0.5 and 2.6 or between 1.0 and 2.5, wherein the average degree of substitution is defined as the average number of carboxymethyl groups per monosaccharide unit.

In other embodiments, the carboxymethyl inulin has an average degree of substitution (DS) by carboxymethyl groups of between 0.1 and 2.9, such as between 0.1 and 2.8, between 0.1 and 2.7, between 0.1 and 2.6, between 0.1 and 2.5, between 0.1 and 2.4, between 0.1 and 2.3, between 0.1 and 2.2, between 0.1 and 2.1 or between 0.1 and 2.0, wherein the average degree of substitution is defined as the average number of carboxymethyl groups per monosaccharide unit.

In yet other embodiments, the carboxymethyl inulin has an average degree of substitution (DS) between 0.3 and 3, such as between 0.5 and 3, between 1 and 3, between 1.25 and 3, between 1.5 and 3 or between 1.75 and 3.

In embodiments, the molecules of the carboxymethyl inulin have a degree of polymerization (DP) between 3 and 3000, preferably within the range of 3 and 80, such as between, between 3 and 60 or between 3 and 45.

In embodiments, at least 95 % of the carboxymethyl inulin molecules have a degree of polymerization (DP) between 3 and 80, preferably between 8 and 80, such as between 10 and 80. In other embodiments, at least 95 % of the carboxymethyl inulin molecules have a degree of polymerization (DP) between 3 and 70, preferably between 3 and 60, such as between 3 and 50 or between 3 and 45.

As explained hereinbefore, it was known that carboxymethyl inulin can be used as an antiscalant, crystal growth inhibitor and sequestering agent for free cations in water treatment systems for hard water. The inventors have unexpectedly found that carboxymethyl inulin can also be used as an inhibitor of biofilm formation, as a biofilm-removal agent or as a permeability enhancer for a membrane in water treatment systems. The latter effects are not limited to hard

water but were also found in soft water.

Hence, the effects of the invention can be obtained in hard water and in soft water. If the water treatment system uses hard water or water with a high electrical conductivity, carboxymethyl inulin can further be used as an antiscalant, crystal growth inhibitor and/or sequestering agent for free cations.

The form and the type of the membrane used in the water treatment system is not particularly limited. In an embodiment, the type of membrane used in the water treatment system is chosen from the group consisting of a reverse osmosis membrane, a forward osmosis membrane, a nanofiltration membrane, an ultrafiltration membrane and a microfiltration membrane.

In an embodiment, the shape of the membrane used in the water treatment system is chosen from the group consisting of a spiral-wound-type membrane, a hollow-fibre membrane, a tubular-type membrane and a plane-type membrane.

In embodiments, the membrane comprises or consists of a metal, ceramic material or a polymer chosen from the group consisting of acrylates, polystyrenes, polycarbonates, polyimides, epoxy resins, cyclic olefin polymers, polyesters, polyether ether ketones, poly(N-vinylcarbazole), polysulfones, acrylonitriles, poly(arylene oxide), piperazine-containing polymers, cellulosic polymers, polyamides, polyimides, polyethers, poly(arylene oxides), polyurethanes, poly(acrylates), polysulfides, polyolefins, polyvinyls, polyallyls; poly(benzobenzimidazole), polyhydrazides, polyoxadiazoles, polytriazoles, poly(benzimidazole), polycarbodiimides, polyphosphazines, as well as copolymers, derivatives, and combinations thereof.

In a preferred embodiment, the water treatment system comprises a reverse osmosis membrane, more preferably a polyamide-based reverse osmosis membrane.

In another preferred embodiment, the water treatment system comprises a membrane-type candle filter, more preferably a polypropylene-based membrane-type candle filter.

In accordance with the invention, the water treatment system can be used for any water treatment process. In a particularly preferred embodiment, the water treatment system is a water purification system. Water purification within the scope of the invention includes, amongst others, process water purification, wastewater purification, reused water purification, river water purification, lake water purification and purification and desalination of seawater or brackish water.

In preferred embodiments, the water treatment system is a water purification system for the production of drinking water, pure water, deionized water, ultra-pure grade water, process water for industry, water for food and beverage uses, water for steam production and/or water for use as heat transfer medium.

The water to be treated may for example comprise microorganisms, extracellular polymeric substances (EPS), (heavy) metals, suspended solids, pesticides, toxins, pharmaceuticals, drugs and oils.

The water to be treated may comprise one or more additional additives against inorganic fouling, organic fouling, colloidal fouling, biofouling or a combination thereof. In embodiments, the water to be treated comprises one or more further compounds such as antiscalants and/or dispersants. In another embodiment, the water to be treated does not comprise one or more additional additives against inorganic fouling, organic fouling, colloidal fouling, biofouling or a combination thereof.

In embodiments, the water to be treated does not comprise one or more oxidizing and/or non-oxidizing antimicrobial agents against biofouling. In other embodiments, the water to be treated comprises one or more oxidizing and/or non-oxidizing antimicrobial agents against biofouling. Examples of oxidizing antimicrobial agents include chlorine, chlorine dioxide, chloramine (e.g. monochoramine), bromine, stabilized bromine, hypochlorous acid and the salts thereof, chlorous acid and the salts thereof, chloric acid and the salts thereof, perchloric acid and the salts thereof, chlorinated isocyanuric acid and the salts thereof, hypobromous acid and the salts thereof, bromous acid and the salts thereof, bromic acid and the salts thereof, perbromic acid and the salts thereof, brominated isocyanuric acid and the salts thereof and combinations thereof. Examples of non-oxidizing antimicrobial agents include 2,2-dibromo-3-nitrilopropionamide, 2-bromo-2-nitro-1,3-propanediol, isothiazolone and combinations thereof.

In accordance with the invention, the water to be treated in the first aspect may have undergone one or more pre-treatment steps with the aim of reducing the concentration of one or more contaminants, reducing the hardness, reducing the electric conductivity or a combination thereof.

These pre-treatment steps could include for example softening, demineralization, addition of a chemical agent to the water, such as an antimicrobial agent or antiscalant, or a pre-filtration step, such as sand filtration, multimedia filtration, microfiltration (MF), ultrafiltration (UF), and combinations thereof.

In embodiments, the water to be treated has a pH between 3 and 13, preferably between 6 and 11, more preferably between 7 and 10.

In a preferred embodiment, the water to be treated has a temperature between -5 °C and 80 °C, more preferably between 5 °C and 60 °C, even more preferably between 5 °C and 35 °C. In another preferred embodiment, the water treatment is performed at a temperature between -5 °C and 80 °C, more preferably between 5 °C and 60 °C, even more preferably between 5 °C and 35 °C.

The way in which the carboxymethyl inulin is used in the water treatment system is not particularly limited. In

embodiments, the carboxymethyl inulin is used continuously or periodically in the water treatment system, preferably continuously.

In embodiments, the use of the carboxymethyl inulin in the water purification system is fully automated or manual.

In embodiments, carboxymethyl inulin is premixed with the water to be treated and then supplied to the water treatment system.

In other embodiments, carboxymethyl inulin is supplied as a secondary aqueous solution, which is then mixed with the water to be treated in such a ratio that the target concentration of the carboxymethyl inulin is reached.

The carboxymethyl inulin as used herein typically is a product obtained by carboxylation of inulin, such as for example inulin extracted from chicory or synthetic inulin, hydrolysis products thereof or fractions thereof having a certain chain-length distribution. The carboxylation may be followed by a step of conversion of the carboxylic acid groups to corresponding carboxylate salts. As will be appreciated by those skilled in the art, the resulting carboxymethyl inulin product may contain certain impurities, such as sodium glycolate, disodium diglycolate, sodium chloride, sodium monochloroacetate, etc.

In an embodiment, the carboxymethyl inulin product applied contains less than 5 wt.% of impurities, based on the dry weight of the carboxymethyl inulin product applied, preferably less than 3 wt.% of impurities, less than 1 wt.% of impurities, less than 0.5 wt.% of impurities, less than 0.3 wt.% of impurities, less than 0.2 wt.% of impurities or less than 0.1 wt.% of impurities.

The carboxymethyl inulin product applied can further be an aqueous solution of carboxymethyl inulin, such as a 30 wt.% or 40 wt.% solution of carboxymethyl inulin in water.

It is to be understood that the amount of carboxymethyl inulin to be applied in the water to be treated concerns the actual weight of carboxymethyl inulin not including impurities. Accordingly, if for example xx ppm of carboxymethyl inulin is to be applied, based on the weight of the water to be treated, and the actual carboxymethyl inulin product to be applied is only *yy%* pure, then (*xx*/*yy*)* 100 ppm of the carboxymethyl inulin product has to be dosed. Similarly, if for example xx ppm of carboxymethyl inulin is to be applied, based on the weight of the water to be treated, and the actual carboxymethyl inulin product to be applied is an zz wt.% aqueous solution wherein the carboxymethyl inulin is only *yy%* pure, then *xx*/(*yy***zz*)* $100^2$ ppm of the aqueous solution has to be dosed.

*Carboxymethyl inulin as an additive in the water to be treated*

In preferred embodiments, the carboxymethyl inulin is applied in the water to be treated. In embodiments, carboxymethyl inulin is added to the water to be treated by premixing the water to be treated with the carboxymethyl inulin. In other embodiments, carboxymethyl inulin is added to the water to be treated by inline dosing of the water to be treated with the carboxymethyl inulin. In still other embodiments, carboxymethyl inulin is supplied via a secondary aqueous stream, which is then mixed with the primary water to be treated in such a ratio that the target concentration of the carboxymethyl inulin is reached.

In a general embodiment covering the treatment of hard water and soft water, the carboxymethyl inulin is applied in the water to be treated in an amount of between 0.01 and 100 ppm, based on the weight of the water to be treated, such as between 0.01 and 75 ppm, between 0.01 and 50 ppm, between 0.01 and 25 ppm, between 0.01 and 15 ppm, between 0.01 and 10 ppm, between 0.01 and 7.5 ppm or between 0.01 and 5 ppm.

In another general embodiment, the carboxymethyl inulin is applied in the water to be treated in an amount between 0.5 and 100 ppm, based on the weight of the water to be treated, such as between 1 and 100 ppm, between 1.5 and 100 ppm, between 2 and 100 ppm, between 3 and 100 ppm, between 5 and 100 ppm, between 10 and 100 ppm or between 20 and 100 ppm.

In yet another general embodiment, the water to be treated has an electrical conductivity at 20 °C of less than 5000 μS/cm, more preferably less than 2000 μS/cm, even more preferably less than 1000 μS/cm, such as less than 750 μS/cm, such as less than 600 μS/cm, less than 300 μS/cm, less than 250 μS/cm, less than 200 μS/cm, less than 150 μS/cm, less than 100 μS/cm, less than 75 μS/cm, less than 50 μS/cm, less than 25 μS/cm, less than 10 μS/cm, less than 5 μS/cm, less than 2 μS/cm or less than 1 μS/cm.

In a preferred embodiment, the water to be treated has an electrical conductivity at 20 °C of between 100 and 1500 μS/cm, between 150 and 1400 μS/cm, between 200 and 1300 μS/cm, between 300 and 1200 μS/cm, between 400 and 1100 μS/cm, between 500 and 1000 μS/cm or between 600 and 900 μS/cm.

In an embodiment, the water to be treated has a total water hardness (mg $CaCO_3$/l) of between 0.01 and 600 mg/l, such as between 0.10 and 500 mg/l, between 5 and 400 mg/l, between 10 and 300 mg/l, between 20 and 200 mg/l or between 30 and 100 mg/l.

In another embodiment, the water to be treated has a total water hardness (mmol/l) of between 0.0001 and 6 mmol/l, such as between 0.01 and 5 mmol/l, between 0.05 and 4 mmol/l, between 0.1 and 3 mmol/l, between 0.2 and 2 mmol/l or between 0.3 and 1 mmol/l.

*Carboxymethyl inulin as an additive in hard water to be treated*

In an embodiment, the water to be treated is hard water. In an embodiment, the water to be treated is hard water having a total water hardness (mg $CaCO_3$/l) of more than 75 mg/l, such as more than 100 mg/l, more than 130 mg/l, more than 160 mg/liter, more than 190 mg/l, more than 220 mg/l, more than 250 mg/l, more than 280 mg/l or more than 300 mg/l.

In an embodiment, the water to be treated is hard water having a total water hardness (mmol/l) of more than 0.75 mmol/l, such as more than 1 mmol/l, more than 1.3 mmol/l, more than 1.60 mmol/liter, more than 1.90 mmol/l, more than 2.2 mmol/l, more than 2.5 mmol/l, more than 2.8 mmol/l or more than 3.0 mmol/l.In another embodiment, the water to be treated is hard water having a total water hardness (mg $CaCO_3$/l) of between 75 and 600 mg/l, such as between 75 and 500 mg/l, between 75 and 400 mg/l, between 75 and 350 mg/l, between 75 and 300 mg/l, between 75 and 250 mg/l or between 75 and 200 mg/l.

In yet another embodiment, the water to be treated is hard water having a total water hardness (mmol/l) of between 0.75 and 6 mmol/l, such as between 075 and 5 mmol/l, between 0.75 and 4 mmol/l, between 0.75 and 3.5 mmol/l, between 0.75 and 3 mmol/l, between 0.75 and 2.5 mmol/l or between 0.75 and 2 mmol/l.

In an embodiment, the water to be treated is hard water and the carboxymethyl inulin used in the water purification system further acts as an antiscalant, preferably as an inhibitor of the crystallization of calcium carbonate.

In an embodiment, the water to be treated is hard water and the carboxymethyl inulin is applied in the water to be treated in an amount between 0.5 and 100 ppm, based on the weight of the water to be treated, such as between 1 and 100 ppm, between 1.5 and 100 ppm, between 2 and 100 ppm, between 3 and 100 ppm, between 5 and 100 ppm, between 10 and 100 ppm or between 20 and 100 ppm.

In another embodiment, the water to be treated is hard water and the carboxymethyl inulin is applied in the water to be treated in an amount between 0.5 and 80 ppm, based on the weight of the water to be treated, such as between 0.5 and 70 ppm, between 0.5 and 60 ppm, between 0.5 and 50 ppm, between 0.5 and 40 ppm, between 0.5 and 30 ppm, between 0.5 and 20 ppm, between 0.5 and 10 ppm or between 0.5 and 5 ppm.

*Carboxymethyl inulin as an additive in soft water to be treated*

In a preferred embodiment, the water to be treated is soft water. In an embodiment, the water to be treated is soft water having a total water hardness (mg $CaCO_3$/l) of less than 75 mg/l, such as less than 65 mg/l, less than 55 mg/l, less than 45 mg/l, less than 35 mg/l, less than 25 mg/l, less than 15 mg/l, less than 10 mg/l, less than 5 mg/l, less than 2 mg/l or less than 1 mg/l.

In a preferred embodiment, the water to be treated is soft water having a total water hardness (mmol/l) of less than 0.75 mmol/l, such as less than 0.65 mmol/l, less than 0.55 mmol/l, less than 0.45 mmol/l, less than 0.35 mmol/l, less than 0.25 mmol/l, less than 0.15 mmol/l, less than 0.10 mmol/l, less than 0.05 mmol/l, less than 0.02 mmol/l or less than 0.01 mmol/l.

In another embodiment, the water to be treated is soft water having a total water hardness (mg $CaCO_3$/l) of between 0.01 and less than 75 mg/l, such as between 0.1 and less than 75 mg/l, between 0.5 and less than 75 mg/l, between 1 and less than 75 mg/l, between 2 and less than 75 mg/l, between 5 and less than 75 mg/l, between 10 and less than 75 mg/l or between 15 and less than 75 mg/l.

In another embodiment, the water to be treated is soft water having a total water hardness (mmol/l) of between 0.0001 and less than 0.75 mmol/l, such as between 0.001 and less than 0.75 mmol/l, between 0.005 and less than 0.75 mmol/l, between 0.01 and less than 0.75 mmol/l, between 0.02 and less than 0.75 mmol/l, between 0.05 and less than 0.75 mmol/l, between 0.1 and less than 0.75 mmol/l or between 0.15 and less than 0.75 mmol/l.

In yet another embodiment, the water to be treated is soft water having a total water hardness (mg $CaCO_3$/l) of between 0.01 and 65 mg/l, between 0.01 and 55 mg/l, between 0.01 and 45 mg/l, between 0.01 and 35 mg/l, between 0.01 and 25 mg/l, between 0.01 and 15 mg/l or between 0.01 and 10 mg/l.

In yet another embodiment, the water to be treated is soft water having a total water hardness (mmol/l) of between 0.0001 and 0.75 mmol/l, such as between 0.0001 and 0.65 mmol/l, between 0.0001 and 0.55 mmol/l, between 0.0001 and 0.45 mmol/l, between 0.0001 and 0.35 mmol/l, between 0.0001 and 0.25 mmol/l, between 0.0001 and 0.15 mmol/l or between 0.0001 and 0.1 mmol/l.

In a preferred embodiment, the water to be treated is soft water and the carboxymethyl inulin is added to the water to be treated in an amount of between 0.1 and 15 ppm, based on the weight of the water to be treated, such as between 0.2 and 8 ppm, between 0.3 and 10 ppm or between 0.4 and 5 ppm or between 0.5 and 3 ppm, such as 1, 1.5 or 2 ppm.

In yet another embodiment, the water to be treated is soft water and the carboxymethyl inulin is added to the water to be treated in an amount of between 0.1 and 14 ppm, based on the weight of the water to be treated, such as between 0.1 and 10 ppm, between 0.1 and 8 ppm, between 0.1 and 5 ppm or between 0.1 and 3 ppm.

*Carboxymethyl inulin as an additive in an aqueous cleaning solution*

In other preferred embodiments, the carboxymethyl inulin is used in the water treatment system in an aqueous cleaning solution during a (periodical) cleaning step, *e.g.* as (b) a biofilm-removal agent, as (c) a permeability enhancer for the membrane or (d) a combination of (b) and (c).

Such as (periodical) cleaning step can for example be performed after the pressure drop over the membrane in the water treatment system, i.e. during water treatment, has reached a preset maximum value. After turning of the water treatment process, the water treatment system can be subjected to the aqueous cleaning solution.

In embodiments, the aqueous cleaning solution is prepared by premixing carboxymethyl inulin with an aqueous fluid. In other embodiments, the aqueous cleaning solution is prepared by inline dosing of the aqueous fluid with the carboxymethyl inulin.

In still other embodiments, the aqueous cleaning solution is prepared by supplying carboxymethyl inulin via a secondary aqueous stream, which is then mixed with the aqueous fluid in such a ratio that the target concentration of the carboxymethyl inulin in the aqueous cleaning solution is reached.

The aqueous cleaning solution may comprise one or more additional additives against inorganic fouling, organic fouling, colloidal fouling, biofouling or a combination thereof. In an embodiment, the aqueous cleaning solution does not comprise one or more additional additives against inorganic fouling, organic fouling, colloidal fouling, biofouling or a combination thereof.

In embodiments, the aqueous cleaning solution further comprises one or more oxidizing and/or non-oxidizing antimicrobial agents against biofouling. In other embodiments, the aqueous cleaning solution does not comprise one or more oxidizing and/or non-oxidizing antimicrobial agents against biofouling. Examples of oxidizing antimicrobial agents include chlorine, chlorine dioxide, chloramine (e.g. monochoramine), bromine, stabilized bromine, hypochlorous acid and the salts thereof, chlorous acid and the salts thereof, chloric acid and the salts thereof, perchloric acid and the salts thereof, chlorinated isocyanuric acid and the salts thereof, hypobromous acid and the salts thereof, bromous acid and the salts thereof, bromic acid and the salts thereof, perbromic acid and the salts thereof, brominated isocyanuric acid and the salts thereof and combinations thereof. Examples of non-oxidizing antimicrobial agents include 2,2-dibromo-3-nitrilopropionamide, 2-bromo-2-nitro-1,3-propanediol, isothiazolone and combinations thereof.

In a preferred embodiment, the aqueous cleaning solution has a carboxymethyl inulin concentration of between 1 and 50000 ppm, based on the weight of the the aqueous cleaning solution, such as between 50 and 10000 ppm, between 100 and 5000 ppm or between 150 and 1000 ppm.

*Process for the treatment of soft water*

In a second aspect, the invention concerns a process for the treatment of soft water using membrane filtration, wherein said process comprises the steps of:

(i) providing a water treatment system comprising a membrane;
(ii) providing a stream of soft water to be treated, said stream not comprising carboxymethyl inulin;
(iii) adding carboxymethyl inulin to the stream of soft water to be treated provided in step (ii); and
(iv) treating the stream obtained in step (iii) by filtration over the membrane, resulting in a retentate and a permeate.

Wherever possible, preferred embodiments defined in the context of the first aspect equally apply to the second aspect.

In preferred embodiments, the process according to the second aspect is a process for:

(a) inhibiting biofilm formation in the water treatment system; or
(b) removal of a biofilm present in the water treatment system; or
(c) for enhancing the permeability of the membrane; or
(d) a combination of (a) - (c).

In an embodiment, the soft water to be treated provided in step (ii) has a total water hardness (mg $CaCO_3$/l) of less than 75 mg/l, such as less than 65 mg/l, less than 55 mg/l, less than 45 mg/l, less than 35 mg/l, less than 25 mg/l, less than 15 mg/l, less than 10 mg/l, less than 5 mg/l, less than 2 mg/l or less than 1 mg/l.

In a preferred embodiment, the soft water to be treated provided in step (ii) has a total water hardness (mmol/l) of less than 0.75 mmol/l, such as less than 0.65 mmol/l, less than 0.55 mmol/l, less than 0.45 mmol/l, less than 0.35 mmol/l, less than 0.25 mmol/l, less than 0.15 mmol/l, less than 0.10 mmol/l, less than 0.05 mmol/l, less than 0.02 mmol/l or less than 0.01 mmol/l.

In another embodiment, the soft water to be treated provided in step (ii) has a total water hardness (mg $CaCO_3$/l)

of between 0.01 and less than 75 mg/l, such as between 0.1 and less than 75 mg/l, between 0.5 and less than 75 mg/l, between 1 and less than 75 mg/l, between 2 and less than 75 mg/l, between 5 and less than 75 mg/l, between 10 and less than 75 mg/l or between 15 and less than 75 mg/l.

In another embodiment, the soft water to be treated provided in step (ii) has a total water hardness (mmol/l) of between 0.0001 and less than 0.75 mmol/l, such as between 0.001 and less than 0.75 mmol/l, between 0.005 and less than 0.75 mmol/l, between 0.01 and less than 0.75 mmol/l, between 0.02 and less than 0.75 mmol/l, between 0.05 and less than 0.75 mmol/l, between 0.1 and less than 0.75 mmol/l or between 0.15 and less than 0.75 mmol/l.

In yet another embodiment, the soft water to be treated provided in step (ii) has a total water hardness (mg $CaCO_3$/l) of between 0.01 and 65 mg/l, between 0.01 and 55 mg/l, between 0.01 and 45 mg/l, between 0.01 and 35 mg/l, between 0.01 and 25 mg/l, between 0.01 and 15 mg/l or between 0.01 and 10 mg/l.

In yet another embodiment, the soft water to be treated provided in step (ii) has a total water hardness (mmol/l) of between 0.0001 and 0.75 mmol/l, such as between 0.0001 and 0.65 mmol/l, between 0.0001 and 0.55 mmol/l, between 0.0001 and 0.45 mmol/l, between 0.0001 and 0.35 mmol/l, between 0.0001 and 0.25 mmol/l, between 0.0001 and 0.15 mmol/l or between 0.0001 and 0.1 mmol/l.

In a preferred embodiment, the carboxymethyl inulin is added to the water to be treated in step (iii) in an amount of between 0.1 and 15 ppm, based on the weight of the soft water to be treated, such as between 0.2 and 8 ppm, between 0.3 and 10 ppm or between 0.4 and 5 ppm or between 0.5 and 3 ppm, such as 1, 1.5 or 2 ppm.

In yet another embodiment, carboxymethyl inulin is added to the water to be treated in step (iii) in an amount of between 0.1 and 14 ppm, based on the weight of the soft water to be treated, such as between 0.1 and 10 ppm, between 0.1 and 8 ppm, between 0.1 and 5 ppm or between 0.1 and 3 ppm.

*Process for the removal of* ***biofouling***

In a third aspect, the invention concerns a process for the removal of biofouling from a water treatment system comprising a membrane, wherein said process comprises the steps of:

(i) providing a water treatment system comprising a membrane, wherein the water treatment system comprises biofouling;
(ii) providing an aqueous cleaning solution comprising carboxymethyl inulin;
(iii) treating the water treatment system comprising the membrane with the aqueous cleaning fluid provided in step (ii).

The carboxymethyl inulin in the aqueous cleaning solution acts as a biofilm-removal agent, as a permeability enhancer for the membrane or a combination thereof.

In a preferred embodiment, the biofouling is present on the membrane, in a membrane cartridge or in a membrane housing, preferably on the membrane.

The aqueous cleaning solution is as defined in the context of the first aspect. Wherever possible, preferred embodiments defined in the context of the first aspect equally apply to the third aspect.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb '*to comprise*' and its conjugations are used in its non-limiting sense to mean that items following the word are included, but items not specifically mentioned are not excluded. In addition, reference to an element by the indefinite article '*a*' or '*an*' does not exclude the possibility that more than one of the element is present, unless the context clearly requires that there be one and only one of the elements. The indefinite article '*a*' or '*an*' thus usually means '*at least one*'.

## EXAMPLES

The surprising effect that carboxymethyl inulin has on the inhibition of biofilm formation is illustrated using data obtained from a water purification plant using fresh surface water, more specifically the Evides Demiwaterplant in the Botlek region of Rotterdam producing industrial process water from feed water largely obtained from the Brielse meer. The feed water had a magnesium concentration of about 10 mg/l and a calcium concentration of about 61 mg/l. This corresponds to a total hardness (mg $CaCO_3$/l) of about 194 mg/liter. Moreover, this corresponds to a total hardness (mmol/l) of about 1.94 mmol/l. The feed water had an electrical conductivity at 20 °C of about 520 μS/cm.

The feed water used in this plant was pre-treated by dissolved air flotation filtration (DAFF) and water softening to remove colloidal matter and metal cations including Fe, Ca and Mg. The pre-treated softened water had a total hardness of (mg $CaCO_3$/l) of about 5.9 mg/l, a total hardness (mmol/l) of about 0.059 mmol/l and an electrical conductivity at 20 °C that was similar to that of the feed water.

Treatment of the pre-treated softened feed water was performed on process skids, each skid comprising a cartridge comprising 3 candle filters and several reverse osmosis arrays. Figure 1 shows a schematic representation of the full water purification system.

The candle filters used in the system were polypropylene Highflow filter cartridges obtained from Beta Industrie (10 μm, 1500 mm length, article number BHF-P010-660-PPSE-01), and the reverse osmosis arrays were spirally wound polyamide-based elements.

Pressure drop across the candle filters and across the reverse osmosis arrays was continuously monitored. The candle filters were replaced when the pressure drop reached a value of about 200 kPa. The reverse osmosis arrays were cleaned using an automated in place cleaning procedure (filters remain in their housing), when the pressure drop reached a certain threshold value. During the cleaning step, one or more, optionally heated, chemical solutions were recycled across the membranes in either co- or counter-current direction. These chemicals can be either an acid, a base, or sodium bisulphite. Suitable acids include weak acids, such as citric acid, acetic acid, gluconic acid, glycolic acid, lactic acid, salicylic acid, or strong acids, such as nitric acid, hydrochloric acid or phosphoric acid or any salt of these acid, or any combination of these acids. Additionally, the vertically mounted reverse osmosis arrays, array 0 as depicted in Figure 1, could be purged with compressed air.

**Example 1**

In a first experiment, the effect of carboxymethyl inulin dosing on fresh candle filters was evaluated. This was done by comparing the pressure drop over the candle filters over time, at constant flux across the candle filters, with and without the use of carboxymethyl inulin in the water to be treated. When the pressure drop reached a value of about 200 kPa, the candle filters were replaced with new ones.

For the experiments with carboxymethyl inulin, the feed water was dosed with 1 ppm of carboxymethyl inulin, based on the weight of the water to be treated, before the candle filter (see CMI dosing location 1 in Figure 1). The carboxymethyl inulin applied was Carboxyline® 25-30 UP, obtained from Cosun Beet Company, The Netherlands, which is a sodium salt, has an average degree of substitution (DS) of 2.5 and a dry weight purity of > 99.7%. Carboxyline® 25-30 UP was added as a 31 wt.% aqueous solution. The 1 ppm dosed however concerns the actual CMI dosed, corrected for the purity.

Figure 2 shows the development of the pressure drop over the candle filters, with one intermediate replacement of the candle filters, wherein carboxymethyl inulin is applied in the water to be treated.

The result of the control experiment is shown in Figure 3, which shows the development of the pressure drop over the candle filters, with one intermediate replacement of the candle filters, wherein no carboxymethyl inulin is applied in the water to be treated.

These figures show that the use of carboxymethyl inulin has a clear effect on the development of pressure drop over the candle filters as a function of time. The initial period after replacement of the candle filters, wherein the pressure drop remains relatively low before increasing exponentially, is clearly lengthened by the use of carboxymethyl inulin, thereby also lengthening the lifetime of the candle filters. Since fresh candle filters were used and since the pre-treated feed water was softened, scaling does not or hardly occur and pressure build-up is indicative for the formation of biofouling.

**Example 2**

In a second experiment, the effect of carboxymethyl inulin dosing on the performance of a reverse osmosis array was evaluated for new reverse osmosis membranes. This was done by comparing the development of pressure drop over all reverse osmosis arrays with and without the use of carboxymethyl inulin in the water to be treated for the full first year after all membranes were replaced. This time period was selected in order to achieve good results, as biofouling requires some time after membrane replacement to build up. Additionally, a long time period minimizes the effect that intermediate cleaning has on the membranes.

For the experiments with carboxymethyl inulin, the pre-treated feed water coming from the candle filters was dosed with 1 ppm of carboxymethyl inulin (as defined in Example 1) before the first reverse osmosis array (see carboxymethyl inulin dosing location 2 in Figure 1).

Figure 4 shows the development of pressure drop over the full reverse osmosis array, with intermediate cleaning steps, throughout the first year of usage, wherein the pre-treated feed water coming from the candle filter is dosed with carboxymethyl inulin.

The control experiment is represented in Figure 5, which shows the development of pressure drop over the full reverse osmosis array, with intermediate cleaning steps, throughout the first year of usage without the use of carboxymethyl inulin.

Figures 4 and 5 show that the use of carboxymethyl inulin has a clear effect on the development of pressure drop over the full reverse osmosis array for new membranes. The pressure drop remains low throughout the full period

when carboxymethyl inulin is dosed. However, without the use of carboxymethyl inulin, after an initial period in which the pressure drop remains low, the pressure drop increases significantly due to biofouling. Since new reverse osmosis membranes were used and since the pre-treated feed water was softened, scaling does not or hardly occur and pressure build-up is indicative for the formation of biofouling.

**Example 3**

In a third experiment, the effect of carboxymethyl inulin dosing on the performance of a reverse osmosis array was evaluated for membranes that had already been in use 3.5 years, by comparing the pressure drop over all reverse osmosis arrays before and after the continuous addition of carboxymethyl inulin to the feed water.

This experiment was performed by first measuring the pressure drop over all reverse osmosis arrays for a period of 2 months before dosing the carboxymethyl inulin. Subsequently, the old membranes were exposed to pre-treated feed water comprising carboxymethyl inulin by continuously dosing the pre-treated feed water coming from the candle filters with 3 ppm of carboxymethyl inulin (as defined in Example 1) before the first reversed osmosis array (see carboxymethyl inulin dosing location 2 in Figure 1).

After a couple of months of continuously exposing the old membranes to carboxymethyl inulin, the pressure drop over all reverse osmosis arrays was again recorded during a period of 2 months, whilst continuing to dose the pre-treated feed water coming from the candle filter with carboxymethyl inulin. This waiting period was used in order to allow the reverse osmosis arrays to achieve a new steady state after the addition of carboxymethyl inulin.

Figure 6 shows the development of pressure drop over the full reverse osmosis array, with intermediate cleaning steps, for a period of 2 months, wherein the pre-treated feed water coming from the candle filters is dosed with carboxymethyl inulin.

The results of the control experiment are shown in Figure 7, which depicts the development of pressure drop, with intermediate cleaning steps, over the full reverse osmosis array for a period of 2 months before the feed water was dosed with carboxymethyl inulin.

Figures 6 and 7 show that the use of carboxymethyl inulin has a clear effect on the development of pressure drop over the full reverse osmosis array for old membranes. In between cleaning intervals the pressure drop without the use of carboxymethyl inulin increases significantly faster than when the pre-treated feed water coming from the candle filter is dosed with carboxymethyl inulin. It can be concluded from Figures 6 and 7 that dosing of carboxymethyl inulin can effectively reduce biofouling on membranes that have already been in use for quite some time because the initial pressure drop in Figure 6 is lower than the final pressure drop in Figure 7. It can further be concluded that dosing of carboxymethyl inulin results in improved cleaning of the membranes and a corresponding lower pressure drop after an intermediate cleaning step. As a result, less (frequent) intermediate cleaning actions need to be performed and the lifetime of the reverse osmosis membranes is lengthened.

## Claims

1. Use of carboxymethyl inulin in a water treatment system comprising a membrane as:

   (a) an inhibitor of biofilm formation; or
   (b) a biofilm-removal agent; or
   (c) a permeability enhancer for the membrane; or
   (d) a combination of (a) - (c).

2. Use according to claim 1, wherein the carboxymethyl inulin is applied:

   • in water to be treated; or
   • in an aqueous cleaning solution during a (periodical) cleaning step of the water treatment system.

3. Use according to claim 2, wherein the carboxymethyl inulin is applied in the water to be treated in an amount of between 0.01 and 100 ppm, based on the weight of the water to be treated.

4. Use according to claim 2 or 3, wherein the water to be treated is soft water, preferably soft water having:

   • a total water hardness (mg $CaCO_3$/l) of less than 75 mg/l; or
   • a total water hardness (mmol/l) of less than 0.75 mmol/l.

**5.** Use according to claim 4, wherein the carboxymethyl inulin is applied in the soft water to be treated in an amount of between 0.1 and 15 ppm, based on the weight of the soft water to be treated.

**6.** Use according to claim 2 or 3, wherein the water to be treated is hard water, preferably hard water having:

- a total water hardness (mg $CaCO_3$/l) of more than 75 mg/l; or
- a total water hardness (mmol/l) of more than 0.75 mmol/l.

**7.** Use according to claim 6, wherein the carboxymethyl inulin is applied in the hard water to be treated in an amount of between 0.5 and 100 ppm, based on the weight of the hard water to be treated.

**8.** Use according to any one of claims 2-3 and 6-7, wherein the water to be treated is hard water and the carboxymethyl inulin used in the water purification system further acts as an antiscalant, preferably as an inhibitor of the crystallization of calcium carbonate.

**9.** Process for the treatment of soft water using membrane filtration, wherein said process comprises the steps of:

(i) providing a water treatment system comprising a membrane;
(ii) providing a stream of soft water to be treated, said stream not comprising carboxymethyl inulin;
(iii) adding carboxymethyl inulin to the stream of soft water to be treated provided in step (ii); and
(iv) treating the stream obtained in step (iii) by filtration over the membrane, resulting in a retentate and a permeate.

**10.** Process for the removal of biofouling from a water treatment system comprising a membrane, wherein said process comprises the steps of:

(i) providing a water treatment system comprising a membrane, wherein the water treatment system comprises biofouling;
(ii) providing an aqueous cleaning solution comprising carboxymethyl inulin;
(iii) treating the water treatment system comprising the membrane provided in step (i) with the aqueous cleaning solution provided in step (ii).

**11.** Process according to claim 9, wherein the stream of soft water provided in step (ii) has:

- a total water hardness (mg $CaCO_3$/l) of less than 75 mg/l; or
- a total water hardness (mmol/l) of less than 0.75 mmol/l.

**12.** Process according to claim 10 or use according to claim 2, wherein the aqueous cleaning solution has a carboxymethyl inulin concentration of between 1 and 50000 ppm, based on the weight of the the aqueous cleaning solution.

**13.** Use according to any one of claims 1 - 8 or 12 or process according to any one of claims 9 - 12, wherein the carboxymethyl inulin has an average degree of substitution (DS) by carboxymethyl groups of between 0.1 and 3, wherein the average degree of substitution is defined as the average number of carboxymethyl groups per monosaccharide unit.

**14.** Use according to any one of claims 1 - 8 or 12 or process according to any one of claims 9 - 12, wherein the carboxymethyl inulin comprises free acid carboxyl groups, carboxylate salts of metal cations, carboxylate salts of ammonium cations, carboxylate salts of primary ammonium cations, carboxylate salts of secondary ammonium cations, carboxylate salts of tertiary ammonium cations, carboxylate salts of quaternary ammonium cations or combinations thereof.

**15.** Use according to any one of claims 1 - 8 or 12 or process according to any one of claims 9 - 12, wherein the type of membrane used in the water treatment system is chosen from the group consisting of a reverse osmosis membrane, a forward osmosis membrane, a nanofiltration membrane, an ultrafiltration membrane and a microfiltration membrane.

*Fig. 1*

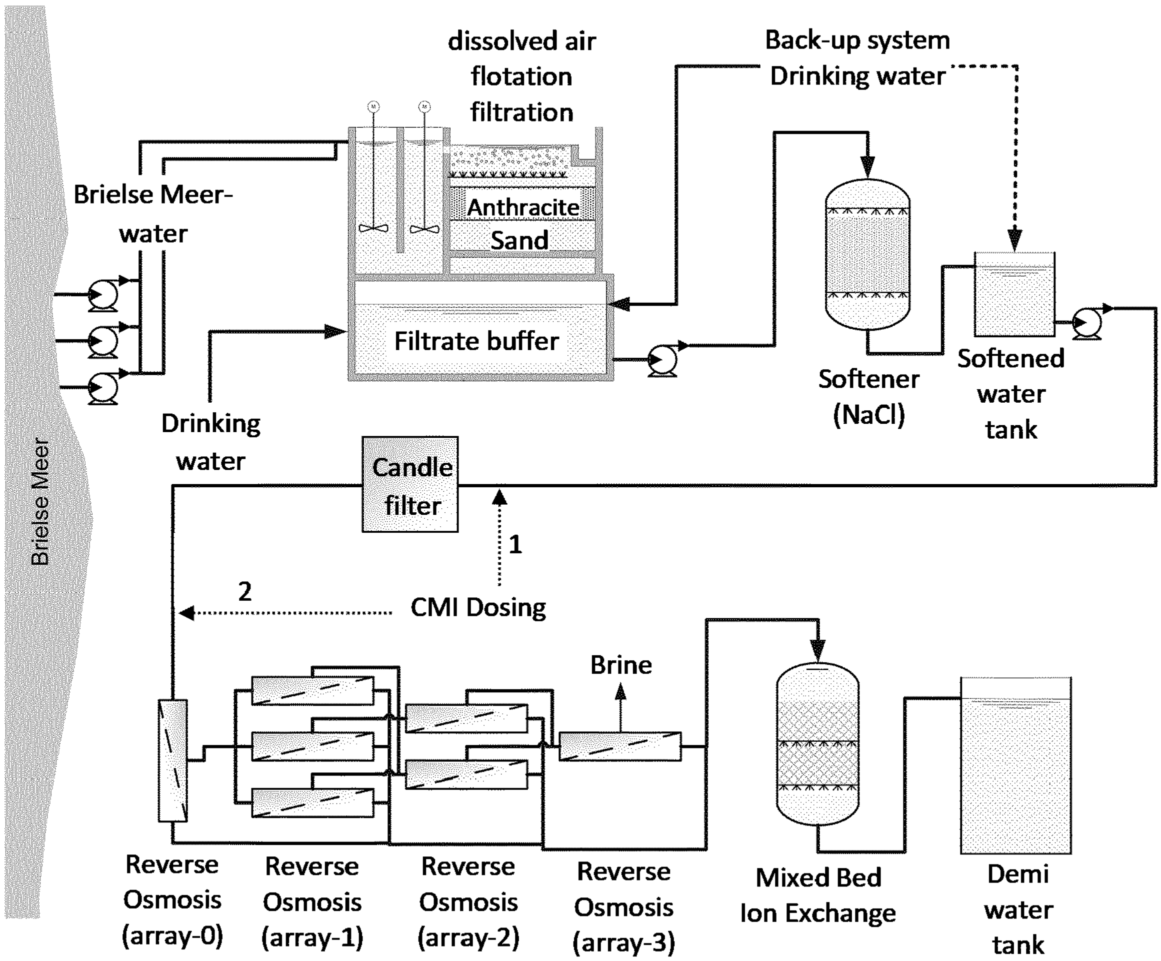
dissolved air
flotation
filtration
Back-up system
Drinking water
Brielse Meer-
water
Anthracite
Sand
Filtrate buffer
Softener
(NaCl)
Softened
water
tank
Drinking
water
Brielse Meer
Candle
filter
1
2
CMI Dosing
Brine
Reverse
Osmosis
(array-0)
Reverse
Osmosis
(array-1)
Reverse
Osmosis
(array-2)
Reverse
Osmosis
(array-3)
Mixed Bed
Ion Exchange
Demi
water
tank

*Fig. 2*

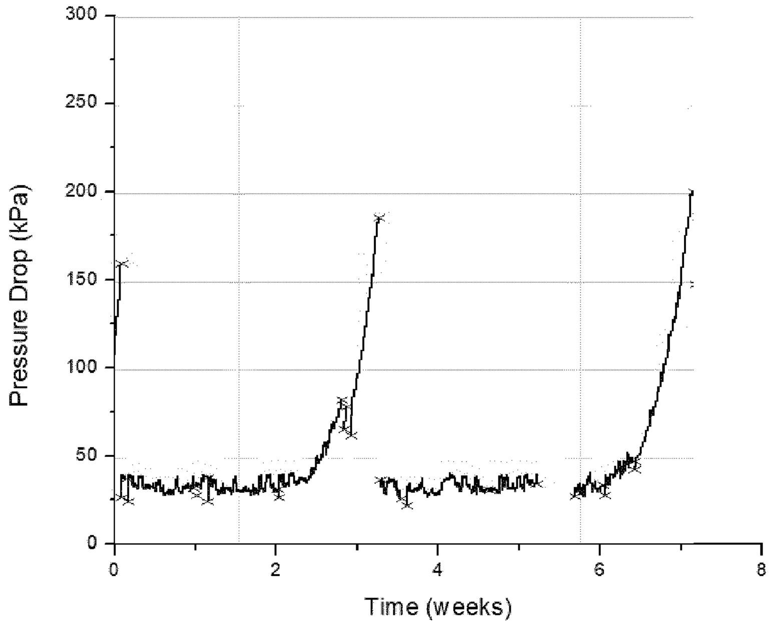
Pressure Drop (kPa)
300
250
200
150
100
50
0
0
2
4
6
8
Time (weeks)

*Fig. 3*

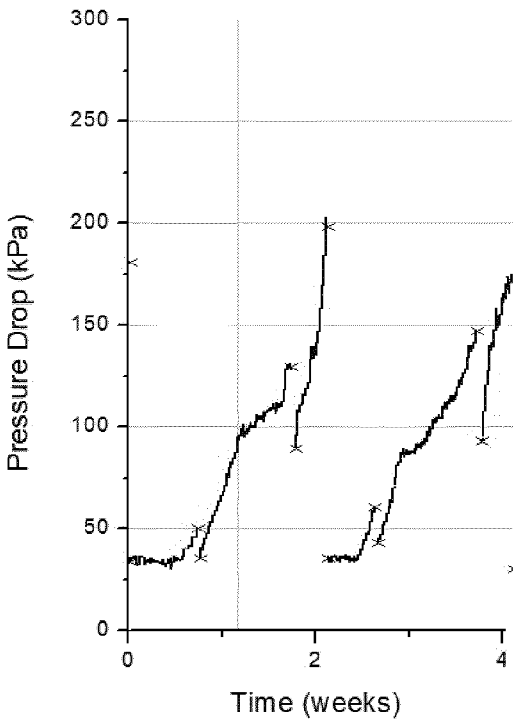
Pressure Drop (kPa)
300
250
200
150
100
50
0
0
2
4
Time (weeks)

# *Fig. 4*

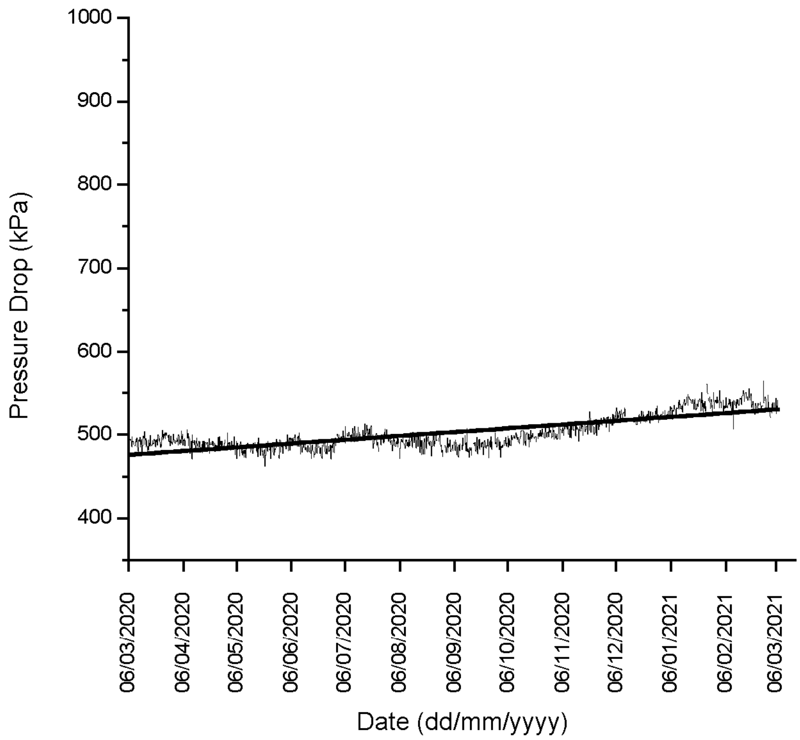
1000
900
800
700
600
500
400
Pressure Drop (kPa)
06/03/2020
06/04/2020
06/05/2020
06/06/2020
06/07/2020
06/08/2020
06/09/2020
06/10/2020
06/11/2020
06/12/2020
06/01/2021
06/02/2021
06/03/2021
Date (dd/mm/yyyy)

# *Fig. 5*

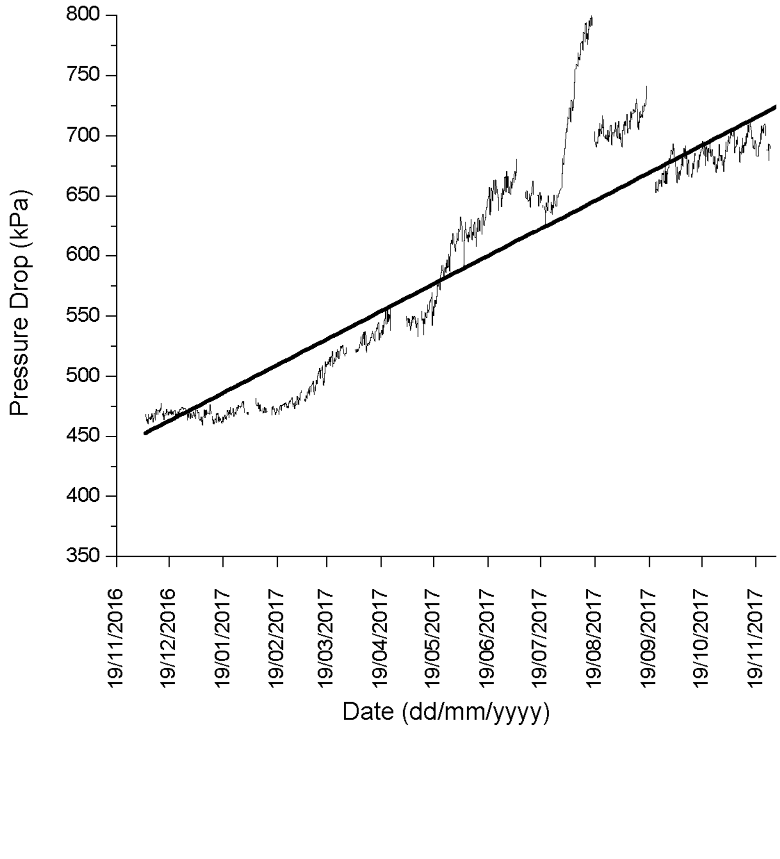
800
750
700
650
600
550
500
450
400
350
Pressure Drop (kPa)
19/11/2016
19/12/2016
19/01/2017
19/02/2017
19/03/2017
19/04/2017
19/05/2017
19/06/2017
19/07/2017
19/08/2017
19/09/2017
19/10/2017
19/11/2017
Date (dd/mm/yyyy)

*Fig. 6*

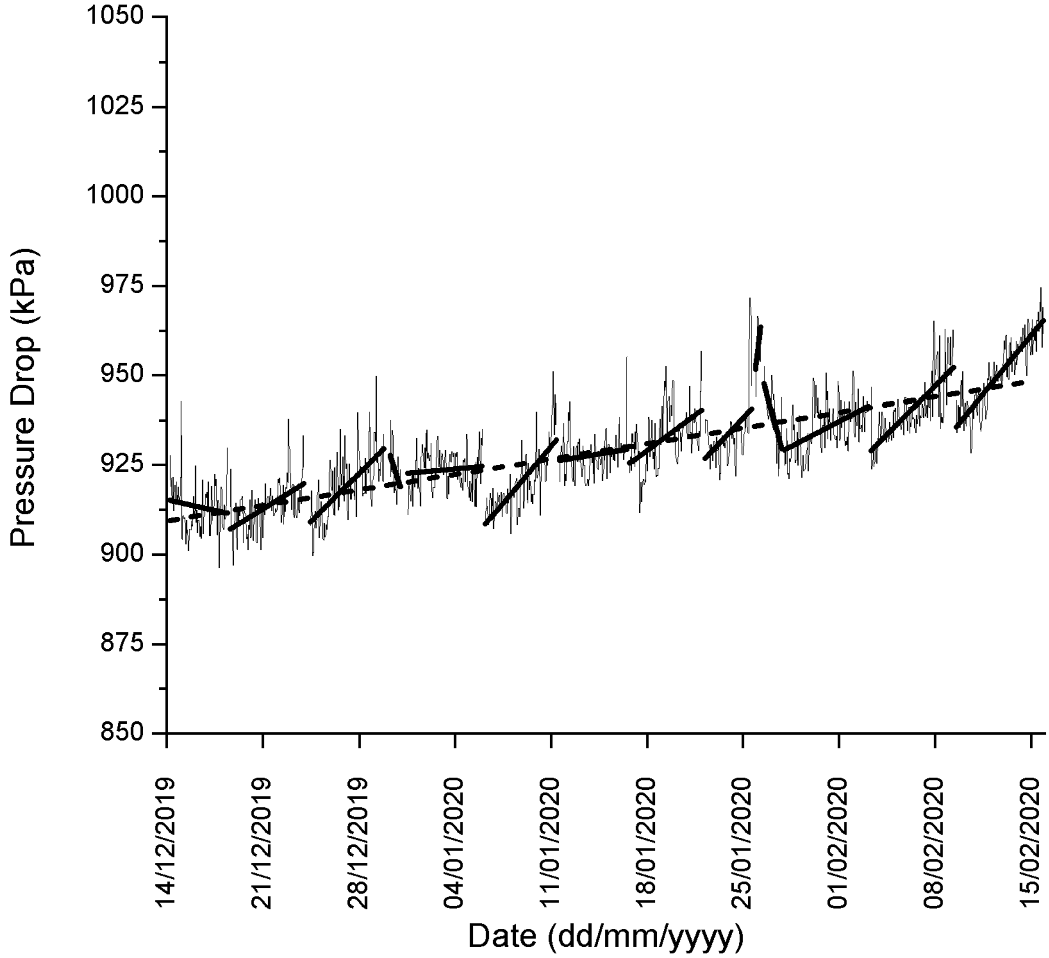
1050
1025
1000
975
950
925
900
875
850
Pressure Drop (kPa)
14/12/2019
21/12/2019
28/12/2019
04/01/2020
11/01/2020
18/01/2020
25/01/2020
01/02/2020
08/02/2020
15/02/2020
Date (dd/mm/yyyy)

*Fig. 7*

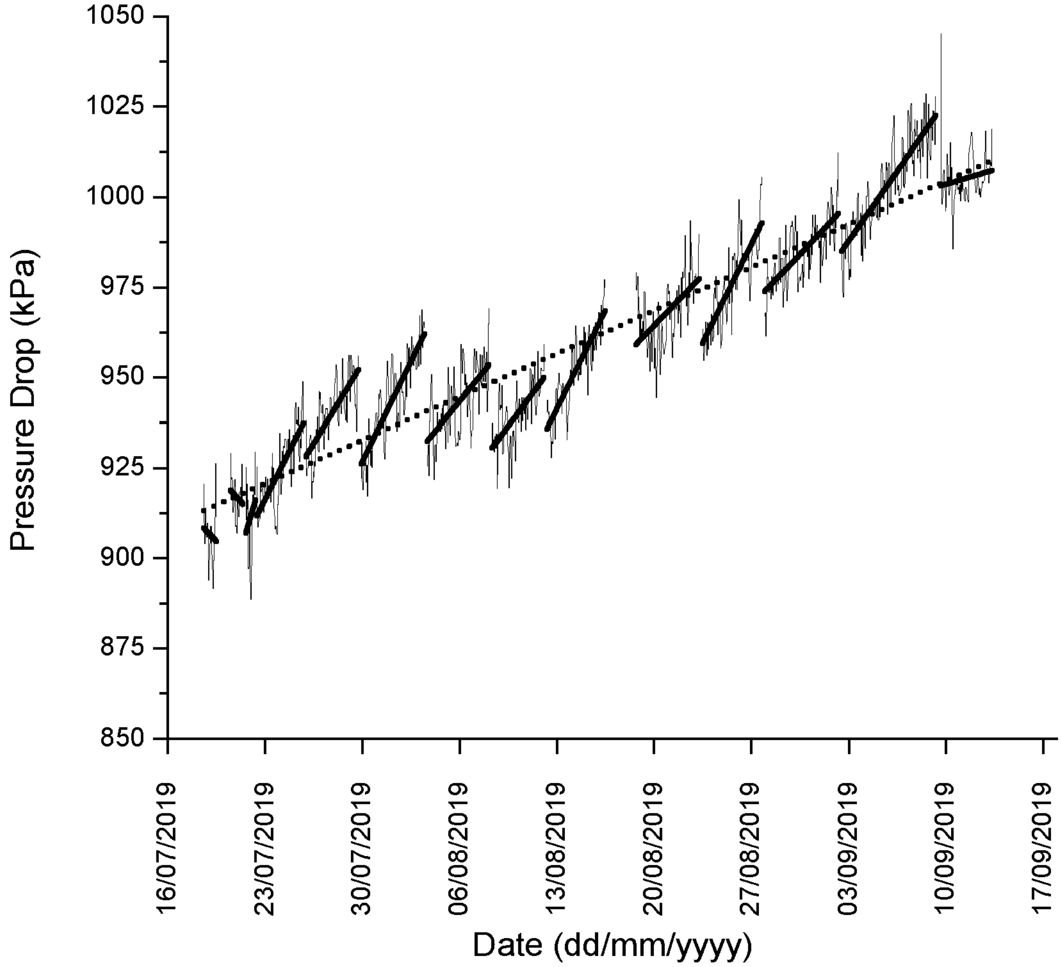
1050
1025
1000
975
950
925
900
875
850
Pressure Drop (kPa)
16/07/2019
23/07/2019
30/07/2019
06/08/2019
13/08/2019
20/08/2019
27/08/2019
03/09/2019
10/09/2019
17/09/2019
Date (dd/mm/yyyy)

Europäisches Patentamt
European Patent Office
Office européen des brevets

# EUROPEAN SEARCH REPORT

Application Number
EP 22 20 0777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 548 438 A1 (LW S R L [IT]) 9 October 2019 (2019-10-09) * paragraph [0001] - paragraph [0099] * | 1-15 | INV. C02F5/10 ADD. C02F1/00 C02F1/24 C02F1/44 C02F101/30 C02F1/76 |
| A | US 2004/014623 A1 (KUZEE HENDRIKA CORNELIA [NL] ET AL) 22 January 2004 (2004-01-22) * paragraph [0001] - paragraph [0058] * | 1-15 | |
| A | CN 105 502 698 A (CHINA PETROLEUM & CHEM CORP ET AL.) 20 April 2016 (2016-04-20) * the whole document * | 1-15 | |
| A | US 6 506 258 B1 (BERENDS ROBERT [NL] ET AL) 14 January 2003 (2003-01-14) * the whole document * | 1-15 | |

TECHNICAL FIELDS SEARCHED (IPC)

C02F

The present search report has been drawn up for all claims

2

| Place of search | Date of completion of the search | Examiner |
|---|---|---|
| The Hague | 27 January 2023 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 20 0777

This annex lists the patent family members relating to the patent documents cited in the above-mentioned European search report. The members are as contained in the European Patent Office EDP file on
The European Patent Office is in no way liable for these particulars which are merely given for the purpose of information.

27-01-2023

| Patent document cited in search report | Publication date | Patent family member(s) | Publication date |
|---|---|---|---|
| EP 3548438 A1 | 09-10-2019 | EP 3548438 A1 | 09-10-2019 |
| | | WO 2018100505 A1 | 07-06-2018 |
| US 2004014623 A1 | 22-01-2004 | AT 275100 T | 15-09-2004 |
| | | AU 5066201 A | 30-10-2001 |
| | | CA 2406382 A1 | 25-10-2001 |
| | | DE 60105280 T2 | 15-09-2005 |
| | | EP 1278703 A1 | 29-01-2003 |
| | | JP 2004501210 A | 15-01-2004 |
| | | NL 1014985 C2 | 24-10-2001 |
| | | US 2004014623 A1 | 22-01-2004 |
| | | WO 0179122 A1 | 25-10-2001 |
| CN 105502698 A | 20-04-2016 | NONE | |
| US 6506258 B1 | 14-01-2003 | AT 210611 T | 15-12-2001 |
| | | AU 749259 B2 | 20-06-2002 |
| | | BR 9908086 A | 31-10-2000 |
| | | CA 2320848 A1 | 26-08-1999 |
| | | CN 1301238 A | 27-06-2001 |
| | | CZ 20003025 A3 | 17-10-2001 |
| | | DE 69900593 T2 | 01-08-2002 |
| | | DK 1060135 T3 | 11-02-2002 |
| | | EP 1060135 A1 | 20-12-2000 |
| | | ES 2168853 T3 | 16-06-2002 |
| | | HU 0100653 A2 | 30-07-2001 |
| | | ID 26922 A | 22-02-2001 |
| | | JP 2002503498 A | 05-02-2002 |
| | | NL 1008371 C2 | 24-08-1999 |
| | | PL 342547 A1 | 18-06-2001 |
| | | PT 1060135 E | 31-05-2002 |
| | | TR 200002426 T2 | 21-12-2000 |
| | | US 6506258 B1 | 14-01-2003 |
| | | WO 9942410 A1 | 26-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013148937 A1

### Non-patent literature cited in the description


- **H. KIM et al.** *Fuel,* 2019, vol. 253, 754-761
- **H. VERA-VILLALOBOS et al.** *Biofouling,* 2020, vol. 36, 505-515
- **G. VAN ENGELEN et al.** *Desalination and Water Treatment,* 2013, vol. 51, 921-923
- **G. GALJAARD.** *18 Years RO-Experience at WTP Heemskerk, Biofouling Aspects, AMTA/AWWA Membrane Technology Conference, Long Beach, CA,* 14 February 2017